(19) Europäisches Patentamt

European Patent Office

Office européen des brevets

(11) **EP 1 428 773 A1**

(12) **EUROPEAN PATENT APPLICATION**
published in accordance with Art. 158(3) EPC

(43) Date of publication:
**16.06.2004 Bulletin 2004/25**

(51) Int Cl.⁷: **B65G 1/137**, B65G 61/00, G07F 17/12

(21) Application number: **02724677.6**

(22) Date of filing: **02.05.2002**

(86) International application number:
**PCT/JP2002/004391**

(87) International publication number:
**WO 2002/100743 (19.12.2002 Gazette 2002/51)**

(84) Designated Contracting States:
**AT BE CH CY DE DK ES FI FR GB GR IE IT LI LU MC NL PT SE TR**

(30) Priority: **06.06.2001 JP 2001171153**

(71) Applicant: **Honda Giken Kogyo Kabushiki Kaisha Minato-ku, Tokyo 107-8556 (JP)**

(72) Inventors:
• **KIYOHARA, Nobuyoshi,**
  **HONDA GIKEN KOGYO K.K**
  **Minato-ku, Tokyo 107-8556 (JP)**
• **TAKAHASHI, Hidekazu,**
  **HONDA GIKEN KOGYO K.K.**
  **Minato-ku, Tokyo 107-8556 (JP)**
• **KURODA, Yoshinori,**
  **HONDA GIKEN KOGYO K.K.**
  **Minato-ku, Tokyo 107-8556 (JP)**

• **IWAI, Yoshihei, HONDA GIKEN KOGYO K-K.**
  **Minato-ku, Tokyo 107-8556 (JP)**
• **KOYAMA, Tatsuo, HONDA GIKEN KOGYO K.K.**
  **Minato-ku, Tokyo 107-8556 (JP)**
• **ARAI, Makoto, HONDA GIKEN KOGYO K.K.**
  **Minato-ku, Tokyo 107-8556 (JP)**
• **MIYASHITA, Matao, HONDA GIKEN KOGYO K.K**
  **Minato-ku, Tokyo 107-8556 (JP)**
• **MOTOI, Yoshiharu, HONDA GIKEN KOGYO K.K**
  **Minato-ku, Tokyo 107-8556 (JP)**

(74) Representative:
**Cheyne, John Robert Alexander M. et al**
**Haseltine Lake,**
**Imperial House,**
**15-19 Kingsway**
**London WC2B 6UD (GB)**

(54) **METHOD FOR SETTING STORAGE FEE OF ARTICLE STORAGE RACK**

(57)     A method of determining a storage charge of a storage rack, capable of determining a reasonable storage charge reflecting the quantity of actual storage in the storage rack, determines the storage charge by deducting from the full storage charge a reduction value obtained from a vacancy ratio $\alpha$ that is the ratio of the total volume of vacant storage sections relative to the total volume of all storage sections 2, 12, 22, 32, 33, 42 of the storage rack 1, 11, 21, 31, 41.

EP 1 428 773 A1

**Description**

Technical Field

This invention relates to a method of determining a storage charge of a storage rack.

Background Art

The storage charge for a rental storage rack has been uniformly determined for the area or volume occupied by the whole storage space including the passage/work space.

Actually, however, the storage rack does not always contain articles in all of its storage sections, and some vacant storage sections often remain.

For storing the same quantity of articles, the storage charge largely varies with the ratio of vacant storage sections.

However, it is difficult to eliminate such vacant storage sections.

Taking the foregoing into consideration, it is an object of the invention to provide a method of determining a reasonable storage charge reflecting the quantity of articles actually stored in a storage rack.

Disclosure of Invention

To accomplish the object, the invention provides a method of determining a storage charge of a storage rack having storage sections, comprising the step of deducting from a full storage charge a reduction value obtained from a vacancy ratio, by operation of a computer, the vacancy ratio being a ratio of a total volume of vacant storage sections relative to a total volume of all of the storage sections of the storage rack.

The reduction value is determined by multiplying said full storage charge by the vacancy ratio.

In an embodiment of the method of determining a storage charge of a storage rack according to the invention, the full storage charge is the charge for the whole storage space totaling a storage space and a passage/work space.

The storage charge for a storage rack is due for the whole storage space including the article storage space and the passage/work space. However, by employing a new system in which a storage charge is calculated by deducting as much as the vacancy ratio from the full storage charge, a reasonable storage charge reflecting the passage/work space corresponding to vacant storage sections can be determined.

In an embodiment of the method of determining a storage charge of a storage rack according to the invention, the ratio of the passage/work space relative to the storage space is determined by the size of each storage section of the storage rack.

The ratio of the passage/work space relative to the article storage space varies with the size of the storage section of the storage rack, that is, the size of articles stored in the storage rack.

For example, in case of a storage rack having small-sized storage sections for storing small articles, the storage space of the storage rack permitting easy access small articles in storage sections relatively decreases while the ratio of the passage/work space relatively increases.

In contrast, in a storage rack for storing large articles, the passage/work space relatively decreases.

Therefore, the ratio of the passage/work space relative to the article storage space is determined by the size of the storage section of the storage rack, and a reasonable storage charge of the storage rack is determined on the basis of that ratio.

A further embodiment of the invention is characterized in determining the full storage charge by multiplying the area occupied by the whole storage space by a unit storage charge per unit area.

In case the storage charge is calculated based on the area, the full storage charge is first calculated by multiplying the area occupied by the whole storage space by the unit storage charge per unit area, and the storage charge of the storage rack is determined by deducting as much as the vacancy ratio from the full storage charge.

A still further embodiment of the invention is characterized in determining the full storage charge by multiplying the volume occupied by the whole storage space by a unit storage charge per unit volume.

In case the storage charge is calculated based on the unit volume, the full storage charge is first obtained by multiplying the volume occupied by the whole storage space by a unit storage charge per unit volume, and the storage charge of the storage rack is calculated by deducting as much as the vacancy ratio from the full storage charge.

Brief Description of Drawings

Fig. 1 is a schematic perspective view showing a typical storage rack according to the present invention;
Fig. 2 is a schematic perspective view showing a storage rack according to an embodiment of the invention;
Fig. 3 is a schematic perspective view of a storage rack according to another embodiment of the invention;
Fig. 4 is a schematic perspective view of another embodiment of the invention; and
Fig. 5 is a schematic perspective view of a further embodiment of the invention.

Best Mode for Carrying Out the Invention

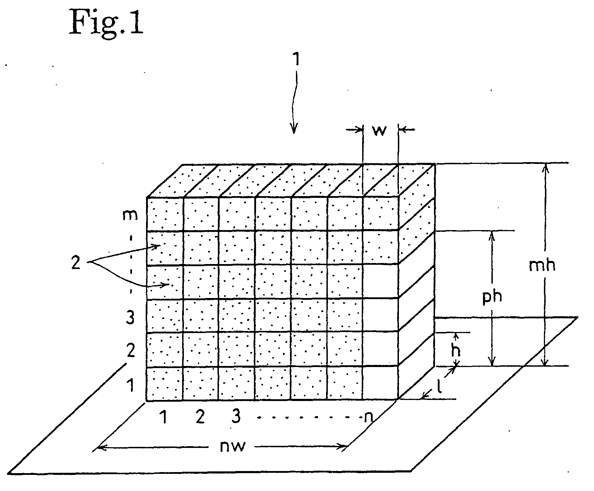

An embodiment of the invention will now be described below with reference to Fig. 1.

A storage rack 1 shown here is a typical storage rack having n columns and m stages of storage sections. Each storage section 2 has the width w, depth 1 and height h.

Description will be made below as to how the storage charge Za is determined in a system configured to calculate the storage charge, based on the area occupied by articles in storage. The calculation of the storage charge to be described below is performed, using arithmetic operation of a computer.

Let the article storage unit charge per unit area be A.

Assume here that the ratio of the passage/work space relative to the article storage space is C.

The ratio C is determined depending on the size of the storage section 2.

The entire article storage space (area) is $nw \cdot l$, and the entire passage/work space (area) is C times thereof, namely, $nw \cdot l \cdot C$.

Therefore, the whole storage space S (occupied area) is the sum of the entire article storage space and the entire passage/work space as follows.

$$S = nw \cdot l + nw \cdot l \cdot C = nw \cdot l \cdot (1+C)$$

Assuming that vacant storage sections exist along one end column over p stages (p vacant storage section), the vacancy ratio $\alpha$ is the ratio of the total volume of the vacant storage sections, $w \cdot l \cdot ph$, relative to the total volume of all storage sections of the storage rack 1, $nw \cdot l \cdot mh$. That is,

$$\alpha = (w \cdot l \cdot ph)/(nw \cdot l \cdot mh) = p/(n \cdot m)$$

The full storage charge is obtained by multiplying the whole storage space S by the storage unit charge A as follows.

$$SxA = nw \cdot l \cdot (1+C) \cdot A$$

Therefore, the storage charge of the storage rack 1 is determined by deducting a reduction value which is obtained by multiplying the full storage charge by the vacancy ratio $\alpha$ as follows.

$$S \cdot A \cdot \alpha = nw \cdot l \cdot (1+C) \cdot A \cdot \alpha$$

As a result, the storage charge Za of the storage rack 1 is determined by deducting $S \cdot A \cdot \alpha$ from the full storage charge $S \cdot A$, and result in:

$$\begin{aligned} Za &= S \cdot A - S \cdot A \cdot \alpha \\ &= S \cdot (1-\alpha) \cdot A \\ &= nw \cdot l \cdot (1+C) \cdot (1-\alpha) \cdot A \\ &= nw \cdot l \cdot (1+C) \cdot \{1-p/(n \cdot m)\} \cdot A \end{aligned}$$

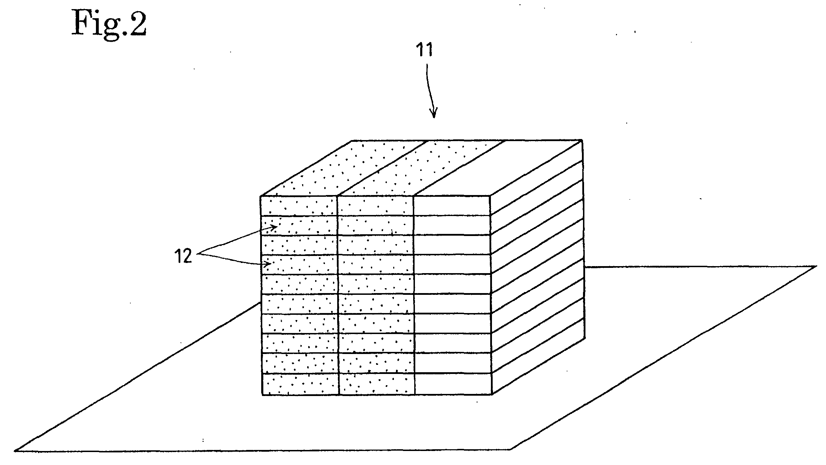

As shown in Fig. 2, in case the storage rack 11 has small-sized storage sections 12 for storage of small articles, the storage space of a storage rack permitting easy access to small articles in each storage section becomes relatively small whereas the ratio of the passage/work space relatively increases. Empirically, the ratio C of the passage/work space relative to the article storage space becomes approximately 7/3.

In case all storage sections in one of three columns are vacant as shown in Fig. 2, the vacancy ratio $\alpha$ is

$$\alpha = p/(n \cdot m) = m/(3 \cdot m) = 1/3$$

Thus one third of the full storage charge is deducted.

Therefore, the storage charge Za of the storage rack 21 is

$$\begin{aligned} Za &= nw \cdot l \cdot (1+C) \cdot (1-\alpha) \cdot A \\ &= 3w \cdot l \cdot (1+7/3) \cdot (1-1/3) \cdot A \\ &= (20/3) \cdot w \cdot l \cdot A \end{aligned}$$

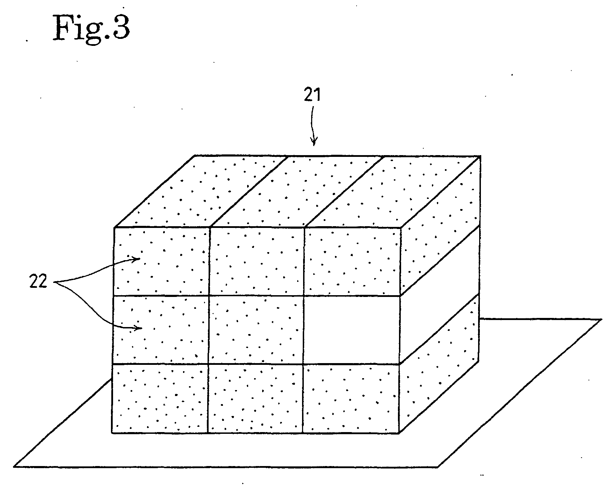

As shown in Fig. 3, in case the storage rack 21 has medium-sized storage sections 22 for storage of medium-sized articles, the ratio C of the passage/work space relative to the article storage space empirically becomes 3/2 approximately.

If only one storage section is vacant among 3 columns and 3 stages of storage sections as shown in Fig. 3, the storage charge Za of storage rack 1 is as follows.

$$\begin{aligned} Za &= nw \cdot l \cdot (1+C) \cdot \{1-p/(n \cdot m)\} \cdot A \\ &= 3w \cdot l \cdot (1+3/2) \cdot \{(1-1/3 \cdot 3)\} \cdot A \\ &= (20/3) \cdot w \cdot l \cdot A \end{aligned}$$

Description will next be made below as to how the storage charge Zb is determined in a system configured to calculate the storage charge, based on the volume occupied by articles in storage.

Let the article storage unit charge per unit volume be B.

The ratio C of the passage/work space relative to the article storage space is determined in the same manner as the foregoing case.

The entire article storage space (volume) is $nw \cdot l \cdot mh$, and the entire passage/work space (area) is C times thereof, namely, $nw \cdot l \cdot mh \cdot C$.

Therefore, the whole storage space S (occupied volume) is the sum of the entire article storage space and the entire passage/work space as follows.

$$S=nw \cdot l \cdot mh+nw \cdot l \cdot mh \cdot C$$
$$=nw \cdot l \cdot mh \cdot (1+C)$$

The vacancy ratio $\alpha$ is the same as the foregoing case, namely,

$$\alpha=p/(n \cdot m)$$

The full storage charge is obtained by multiplying the whole storage space S by the unit storage charge B as follows.

$$SxB=nw \cdot l \cdot mh \cdot (1+C) \cdot B$$

Therefore, the storage charge of the storage rack 21 is determined by deducting as much as the vacancy ratio $\alpha$ as follows.

$$S \cdot B \cdot \alpha=nw \cdot l \cdot mh \cdot (1+C) \cdot B \cdot \alpha$$

As a result, the storage charge Zb of the storage rack 1 is determined by deducting $S \cdot B \cdot \alpha$ from the full storage charge $S \cdot B$, and it results in:

$$Zb=S \cdot B-S \cdot B \cdot \alpha$$
$$=S \cdot (1-\alpha) \cdot B$$
$$=nw \cdot l \cdot mh \cdot (1+C) \cdot (1-\alpha) \cdot B$$
$$=nw \cdot l \cdot mh \cdot (1+C) \cdot \{1-p/(n \cdot m)\} \cdot B$$
$$=w \cdot l \cdot h \cdot (1+C) \cdot (n \cdot m-p) \cdot B$$

The storage charge Zb based on the volume in the storage rack 11 shown in Fig. 2 is calculated as follows.

$$Zb=w \cdot l \cdot h \cdot (1+C) \cdot (n \cdot m-p) \cdot B$$
$$=w \cdot l \cdot h \cdot (1+7/3) \cdot (3 \cdot 10-10) \cdot B$$
$$=(200/3) \cdot w \cdot l \cdot h \cdot B$$

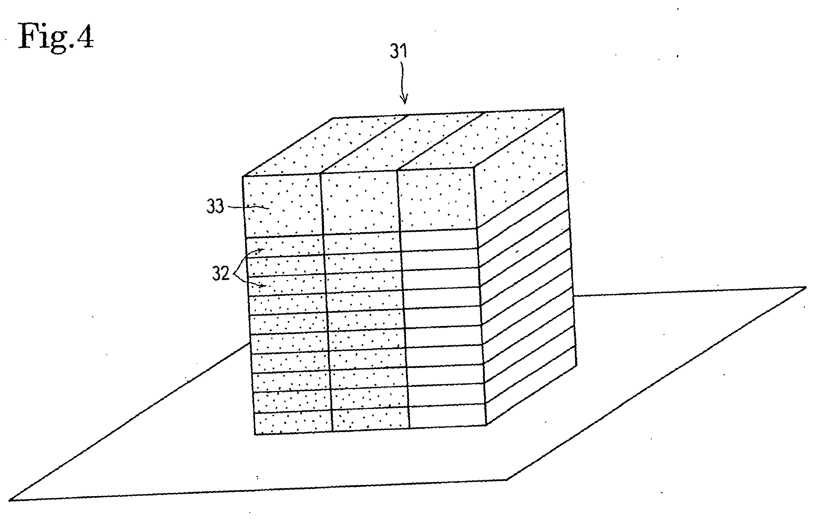

The storage rack 31 shown in Fig. 4 has n column and m stages (3 columns and 10 stages) of small-sized storage sections 32 and the top stage of storage sections 33, and the total height is H.

The small-sized storage sections 32 of one end column are entirely vacant.

In this case, the vacancy ratio $\alpha$ is

$$\alpha=(w \cdot l \cdot mh)/(nw \cdot l \cdot H)=(mh/(n \cdot H)=10h/3H$$

The same value, 7/3, is here again used similarly to the case of Fig. 2 as the ratio C of the passage/work space relative to the article storage space.

Therefore, the storage charge Zb of the storage rack 1 is

$$Zb=S \cdot (1-\alpha) \cdot B$$
$$=nw \cdot l \cdot H \cdot (1+C) \cdot (1-\alpha) \cdot B$$
$$=3w \cdot l \cdot H \cdot (1+7/3) \cdot (1-10h/3H) \cdot B$$
$$=w \cdot l \cdot (10H-100h/3) \cdot B$$

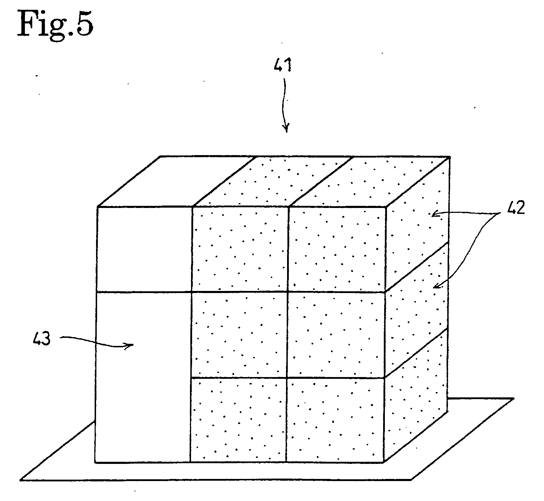

The storage rack 41 shown in Fig. 5 has large-sized storage sections 42 in two columns and three stages and in the top stage of the third column for storing large-sized articles, and a work space 43 is defined below the top shield section in the third column.

In this case, the storage charge is determined, regarding that a large-sized shield section exists in the work space 43 and contains a large-sized article.

In case only the top storage section in the third column is vacant, the storage charge Zb of the storage rack 41 based on the volume is determined as follows.

The vacancy ratio $\alpha$ is

$$\alpha=p/(n \cdot m)=1/3 \cdot 3)=1/9$$

In case of large-sized storage sections, the ratio C of the passage/work space relative to the article storage space is 1. That is, the article storage space equals the passage/work space.

Therefore, the storage charge Zb of the storage rack 41 is:

$$Zb=w \cdot l \cdot h(1+C) \cdot (n \cdot m-p) \cdot B$$
$$=w \cdot l \cdot h \cdot (1+1) \cdot (3 \cdot 3-1) \cdot B$$
$$=16w \cdot l \cdot h \cdot B$$

Since the storage charge is determined by deducting as much as the vacancy ratio from the full storage charge for the whole storage space summing the article storage space and the passage/work space, a reasonable charge reflecting the quantity of articles actually stored in the storage sections can be determined.

Since the ratio C of the passage/work space relative to the article storage space is determined depending on the size of the storage sections of the storage rack, by classifying the sizes of the storage sections into some ranks beforehand and determining the ratio C of the passage/work space relative to the article storage space in each rank, anybody can use it easily.

The storage charge Za, Zb of the storage rack can be readily determined with a computer that stores those equations and those values as the ratio C of the passage/work space relative to the article storage space and executes calculation in response to entry or selection of necessary numerical values from operators.

Upon actual determination of the storage charge Za, Zb of the storage rack 1, once the ratio C of the passage/work space relative to the article storage space is determined, the charge can be logically, easily calculated. Therefore, anyone even without experiences can easily, efficiently determine a reasonable storage charge.

In the process of determining the storage charge, since the deduction for vacant storage sections is calculated by using the formula $S \cdot A \cdot \alpha$ or $S \cdot B \cdot \alpha$ and the ratio of vacant storage sections in the storage rack can be quantitatively calculated by the formula $S \cdot \alpha$, it can be used in various cases, for example, by combining one ratio of vacant storage sections with another, to improve the packing efficiency of a warehouse, for example.

**Claims**

1. A method of determining a storage charge of a storage rack having storage sections, comprising the step of:

   deducting from a full storage charge a reduction value obtained from a vacancy ratio, by operation of a computer, said vacancy ratio being a ratio of a total volume of vacant storage sections relative to a total volume of all of said storage sections of the storage rack.

2. A method of determining a storage charge of a storage rack according to claim 1 wherein said reduction value is determined by multiplying said full storage charge by said vacancy ratio.

3. A method of determining a storage charge of a storage rack according to claim 1 wherein said full storage charge is a charge for the whole storage space totaling a storage space and a passage/work space.

4. A method of determining a storage charge of a storage rack according to claim 3 wherein the ratio of said passage/work space relative to said storage space is determined by the size of each storage section of the storage rack.

5. A method of determining a storage charge of a storage rack according to claim 3 wherein said full storage charge is calculated by multiplying the area occupied by said whole storage space by a unit storage charge per unit area.

6. A method of determining a storage charge of a storage rack according to claim 3 wherein said full storage charge is obtained by multiplying the volume occupied by said whole storage space by a unit storage charge per unit volume.

# Fig.1

Fig.2

11

12

Fig.3

Fig.4

EP 1 428 773 A1

## Fig.5

PATENT COOPERATION TREATY

# PCT

DECLARATION OF NON-ESTABLISHMENT OF INTERNATIONAL SEARCH REPORT
(PCT Article 17(2)(a), Rules 13*ter*.1(c) and 39)

| Applicant's or agent's file reference<br>A-241 | **IMPORTANT DECLARATION** | Date of mailing *(day/month/year)*<br>30 July, 2002 (30.07.02) |
|---|---|---|
| International application No.<br>PCT/JP02/04391 | International filing date *(day/month/year)*<br>02 May, 2002 (02.05.02) | (Earliest) Priority Date *(day/month/year)*<br>06 June, 2001 (06.06.01) |

International Patent Classification (IPC) or both national classification and IPC
Int.Cl⁷ B65G1/137, B65G61/00, G07F17/12

Applicant
Honda Motor Co., Ltd.

This International Searching Authority hereby declares, according to Article 17(2)(a), that **no international search report will be established** on the international application for the reasons indicated below.

1. [x] The subject matter of the international application relates to:

   a. ☐ scientific theories.

   b. ☐ mathematical theories.

   c. ☐ plant varieties.

   d. ☐ animal varieties.

   e. ☐ essentially biological processes for the production of plants and animals, other than microbiological processes and the products of such processes.

   f. [x] schemes, rules or methods of doing business.

   g. ☐ schemes, rules or methods of performing purely mental acts.

   h. ☐ schemes, rules or methods of playing games.

   i. ☐ methods for treatment of the human body by surgery or therapy.

   j. ☐ methods for treatment of the animal body by surgery or therapy.

   k. ☐ diagnostic methods practised on the human or animal body.

   l. ☐ mere presentations of information.

   m. ☐ computer programs for which this International Searching Authority is not equipped to search prior art.

2. ☐ The failure of the following parts of the international application to comply with prescribed requirements prevents a meaningful search from being carried out:

   ☐ the description ☐ the claims ☐ the drawings

3. ☐ The failure of the nucleotide and/or amino acid sequence listing to comply with the standard provided for in Annex C of the Administrative Instructions prevents a meaningful search from being carried out :

   ☐ the written form has not been furnished or does not comply with the standard.

   ☐ the computer readable form has not been furnished or does not comply with the standard.

4. Further comments:
   The "method for setting the storage fee of an article storage rack" defined in claims 1 to 6 is substantially a method of doing business. Therefore this subject matter is not required to be searched by the International Searching Authority according to PCT Article 17(2)(a)(i) and Rule 39.1(iii).

| Name and mailing address of the ISA/<br>Japanese Patent Office | Authorized officer |
|---|---|
| Facsimile No. | Telephone No. |

Form PCT/ISA/203 (July 1998)